# EUROPEAN PATENT APPLICATION

(11) **EP 2 933 440 A1**
(43) Date of publication of application: **21.10.2015**
(21) Application number: 14751725.4
(22) Date of filing: 17.02.2014
(51) Int. Cl.: F01D 25/24, F01D 25/00

(54) **TURBINE NOZZLE AND METHOD FOR MANUFACTURING SAME**

(30) Priority: 18.02.2013 JP 2013029430
(71) Applicant: Mitsubishi Heavy Industries, Ltd., Tokyo 108-8215 (JP)
(72) Inventor: HIRAKI Hiromichi, Tokyo 108-8215 (JP); KAWAMATA Yoshihiro, Tokyo 108-8215 (JP)
(74) Representative: Henkel, Breuer & Partner
(86) International application number: PCT/JP2014/053603
(87) International publication number: WO 2014/126234

(57) **Abstract**

A rocket engine is provided with a fuel flow path (31-39), a catalyst part (51), a turbine (12), a first pump (11), a combustion chamber (21), and a nozzle (22). Hydrocarbon-based fuel flows through the fuel flow path (31-39). The catalyst part (51) is provided in the middle of the fuel flow path (31-39), and gasifies the fuel. The turbine (12) is driven by the gasified fuel. The first pump (11) supplies the fuel to the fuel flow path (31-39) by the driving of the turbine (12). The combustion chamber (21) burns the gasified fuel supplied from the fuel flow path (31-39), and an oxidizing agent. The nozzle (22) delivers combustion gas in the combustion chamber (21) and is cooled by heat exchange with part of the fuel flow path (31-39).

## Description

### Technical Field

The present invention relates to a turbine nozzle and a manufacturing method thereof, and more particularly to the turbine nozzle that is a component of a turbo pump of a rocket engine and the manufacturing method thereof.

### Background Art

In a rocket engine, a turbo pump is used in supplying fuel or oxidizing agent (See Patent Literature 1). As one of components of the turbo pump, there is a turbine nozzle. The turbine nozzle is the component which expands and decompresses a gas, and changes a gas flow direction such that the gas impinges a turbine blade at the optimum angle.

### Citation List

### [Patent Literature]

Patent Literature 1: Japan Patent Application Publication JP 2009-222010 A

### Summary of the Invention

Traditionally, the turbine nozzle was integrally formed as one piece. Note that if a smaller sized turbine nozzle is required, a manufacturing method thereof is limited because it is difficult to make a narrow flow passage by machining. However, if, for example, electrical discharge machining is used, there exists a problem that manufacturing costs and manufacturing time increase. If molding is used, there exist problems that the manufacturing time increases and manufacturing costs relatively becomes high for small-quantity production.

One object of the present invention is providing a technique with which manufacturing costs and manufacturing time of a turbine nozzle can be reduced.

In one aspect of the present invention, a manufacturing method of a turbine nozzle is provided. The turbine nozzle includes an inner ring portion, an outer ring portion having a diameter larger than a diameter of the inner ring portion, and a blade (a vane) arranged between the inner ring portion and the outer ring portion. The manufacturing method includes: (A) forming a first part which includes the blade and one of the inner ring portion and the outer ring portion integrated therein; (B) forming the other of the inner ring portion and the outer ring portion as a second part; (C) combining the first part and the second part such that an outer side surface of the inner ring portion and an inner side surface of the outer ring portion are arranged to oppose each other and that a gap is formed between the blade of the first part and the second part; and (D) flowing a brazing material in a molten state into the gap to braze the blade of the first part and the second part.

The manufacturing method may further include: inserting a spacer in the gap between the above-mentioned step (C) and the above-mentioned step (D).

The brazing material may be arranged at a position adjacent to the gap on an upper surface of the blade.

The brazing material may include both a wire type brazing material and a powder type brazing material.

Preferably, the first part includes the inner ring portion and the blade integrated therein. On the other hand, the second part is the outer ring portion.

In another aspect of the present invention, a turbine nozzle is provided. The turbine nozzle includes: an inner ring portion; an outer ring portion having a diameter larger than a diameter of the inner ring portion; and a blade (a vane) arranged between the inner ring portion and the outer ring portion. The blade and one of the inner ring portion and the outer ring portion are integrally formed as a first part. The other of the inner ring portion and the outer ring portion constitutes a second part. The first part and the second part are joined by brazing.

According to the present invention, it is possible to reduce the manufacturing costs and manufacturing time of the turbine nozzle.

### Brief Description of the Drawings

Fig. 1 is a plan view for schematically indicating a configuration of the turbine nozzle;
Fig. 2 is a side view for schematically indicating a cross-sectional structure of a blade of the turbine nozzle;
Fig. 3 is a plan view for schematically indicating a manufacturing method of the turbine nozzle according to the first embodiment;
Fig. 4 is a plan view for explaining the manufacturing method of the turbine nozzle according to the first embodiment;
Fig. 5 is a side view for explaining the manufacturing method of the turbine nozzle according to the first embodiment;
Fig. 6 is a plan view for explaining the manufacturing method of the turbine nozzle according to the second embodiment;
Fig. 7 is a side view for explaining the manufacturing method of the turbine nozzle according to the second embodiment;
Fig. 8 is a side view for explaining the manufacturing method of the turbine nozzle according to the third embodiment; and
Fig. 9 is a plan view for schematically indicating the manufacturing method of the turbine nozzle according to the fourth embodiment.

### Description of Embodiments

Reference to the accompanying drawings, a turbine nozzle according to some embodiments will be explained.

### (First embodiment)

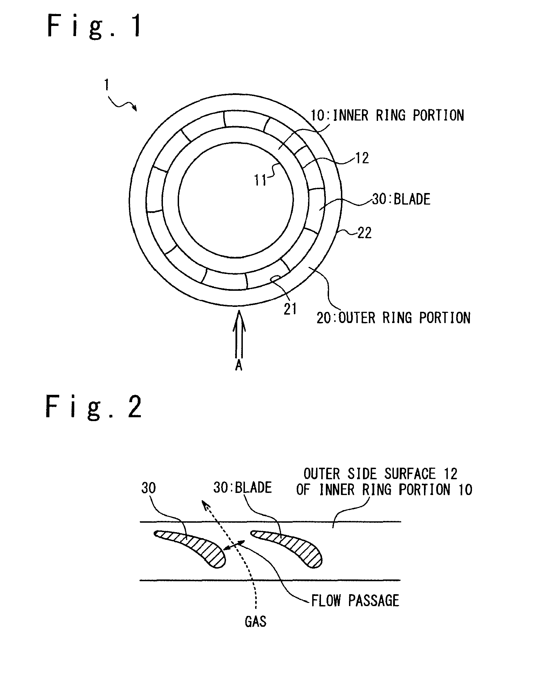

FIG. 1 is the plan view for schematically indicating the turbine nozzle 1 according to the present embodiment. The turbine nozzle 1 includes an inner ring portion 10, an outer ring portion 20, and a blade 30 (blades 30).

Each of the inner ring portion 10 and the outer ring portion 20 is a member having a ring shape. The inner ring portion 10 has an inner side surface 11 and an outer side surface 12. The outer ring portion 20 has an inner side surface 21 and an outer side surface 22. A diameter of the outer ring portion 20 is larger than a diameter of the inner ring portion 10. More specifically, the diameter of the inner side surface 21 of the outer ring portion 20 is larger than the diameter of the outer side surface 12 of the inner ring portion 10. Thus, it is possible to place the inner ring portion 10 inside a ring of the outer ring portion 20 such that the outer side surface 12 of the inner ring portion 10 and the inner side surface 21 of the outer ring portion 20 are arranged to oppose each other.

The blades 30 are positioned between the inner ring portion 10 and the outer ring portion 20. Fig. 2 schematically indicates the cross-sectional structure of the blades 30 when viewed along the direction A shown in Fig. 1. As shown in Fig. 2, each blade 30 has a cross-sectional shape of a cross-sectional airfoil shape. Then, as shown in Fig. 1, a plurality of blades 30 is arranged annularly in a space between the inner ring portion 10 and the outer ring portion 20. A gap between adjacent blades 30 is served as a gas flow passage.

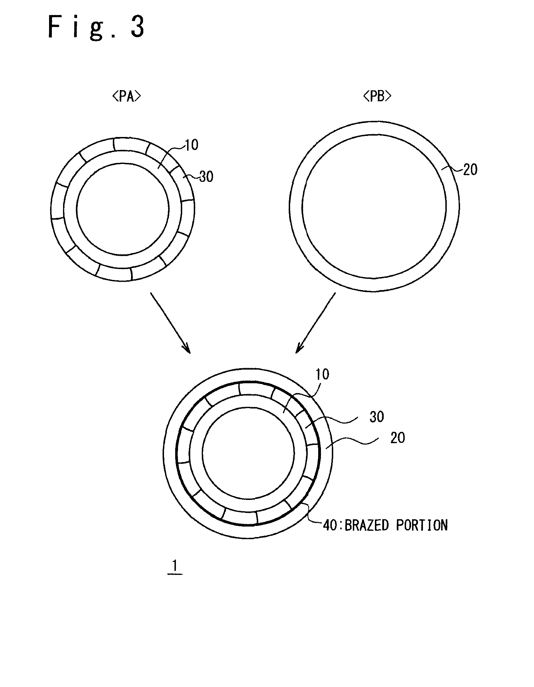

If a more compact turbine nozzle is required, the gas flow passage also becomes narrow. When the turbine nozzle is integrally formed as a one piece, it is difficult to make precisely such a narrow gas flow passage by machining. Therefore, in the present embodiment, a new manufacturing method as shown in Fig. 3 is proposed.

Firstly, a first part PA and a second part PB are separately formed. The first part PA is a part which integrally includes the inner ring portion 10 and a blade 30 (blades 30). On the other hand, the second part PB is the outer ring portion 20. In forming the first part PA, it is not required to form a through hole of complex shape in order to form the gas flow passage and the blade 30 may be formed by processing a surface exposed to outside. That is, it is possible to apply a machining to form the first part PA.

Subsequently, the first part PA is arranged inside a ring of the second part PB (the outer ring portion 20). That is, the first part PA and the second part PB are combined such that the outer side surface 12 of the inner ring portion 10 and the inner side surface 21 of the outer ring portion 20 are arranged to oppose each other. Then, the blades 30 of the first part PA and the second part PB are joined by "brazing". In this way, the turbine nozzle 1 is completed. The turbine nozzle 1 manufactured in this way has a brazed portion 40 (a joint portion formed of a brazing material) between the blade 30 and the second part PB.

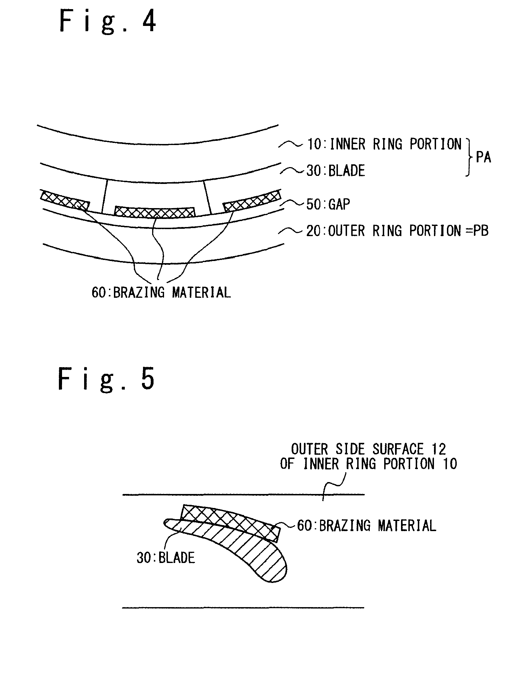

Fig. 4 and Fig. 5 are the plan view and the side view, respectively for explaining the above-mentioned "blazing" in more detail. When the first part PA is disposed inside the ring of the second part PB (the outer ring portion 20), a small gap 50 is formed between the blade 30 and the inner side surface 21 of the second part PB (the outer ring portion 20) as shown in Fig. 4. In other words, a size and shape of the first part PA and the second part PB is designed so that the small gap 50 can be formed. Although it is preferred that the gap is constant, it is not limited thereto. By melting the brazing material 60 and flowing the molten brazing material 60 into the gap 50, the blade 30 of the first part PA and the second part PB are brazed.

The brazing material 60 is a metal alloy having lower melting point than the first part PA and the second part PB, which are base members. For example, a nickel-based brazing material 60 can be used. Such a brazing material 60 is arranged in the gap 50 or the vicinity thereof. Typically, since the gap 50 is very narrow, the brazing material 60 is placed at a position, on the upper surface of the blade 30, adjacent to the gap 50 as shown in Fig. 4 and Fig. 5. After the arrangement of the brazing material 60, heating is performed. By the heating, the brazing material 60 is molten, and the molten brazing material flows into the gap 50. In this way, the blade 30 of the first part PA and the second part PB are brazed.

As explained above, according to the present embodiment, the turbine nozzle 1 is manufactured by brazing the first part PA and the second part PB. In the case in which the turbine nozzle is downsized, the gas passage also becomes narrow. In the case in which the turbine nozzle 1 is integrally formed as the one piece, it is difficult to make precisely such a narrow gas flow passage by machining. On the other hand, according to the present embodiment, the first part PA and the second part PB can be easily made by machining. Therefore, as compared with the case of electrical discharge machining or casting, it is possible to reduce the costs and time for manufacturing the turbine nozzle 1.

### (Second embodiment)

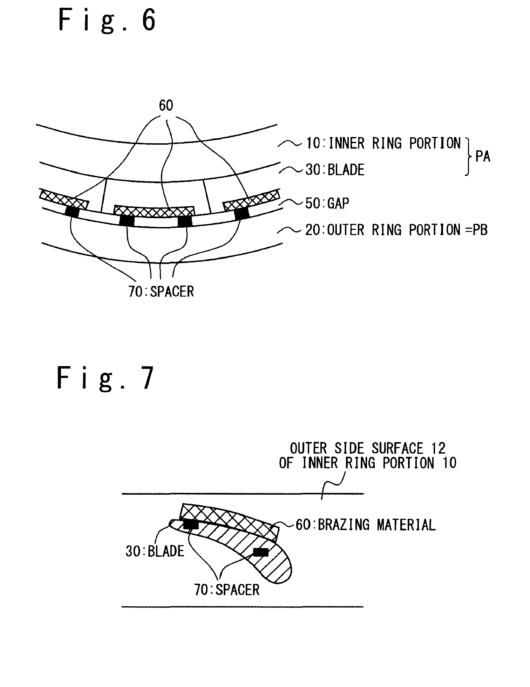

Fig. 6 and Fig. 7 are the plan view and the side view, respectively for explaining the blazing according to the second embodiment. As described above, when the first part PA is disposed inside the ring of the second part PB, the small gap 50 is formed. Therefore, after brazing, "misalignment" between the first part PA and the second part PB is likely to occur. To prevent the occurrence of such misalignment, a spacer 70 (spacers 70) is inserted into the gap 50 according to the second embodiment. After the insertion of the spacer 70 into the gap 50, as in the first embodiment, the brazing material 60 is molten and the molten brazing material is flown into the gap 50.

As the spacer 70, a nickel foil can be exemplified. Such a spacer 70 is arranged between the outer side surface of the blade 30 and the inner side surface 21 of the outer ring portion 20. Installation position of the spacer 70 is arbitrary so long as the occurrence of the misalignment can be prevented. However, it is preferable that the spacers 70 are evenly spaced over the entire circumference of the gap 50.

According to the second embodiment, the same effect as the first embodiment can be obtained. In addition, the "misalignment" between the first part PA and the second part PB is prevented from occurring.

### (Third embodiment)

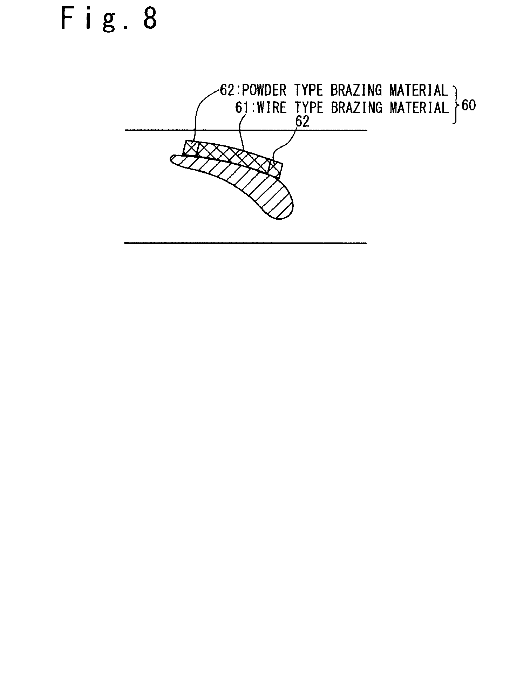

Fig. 8 is the schematic diagram for explaining the brazing material 60 according to the third embodiment. In the third embodiment, the brazing material 60 includes a powder type brazing material 62 in addition to a wire type brazing material 61. The powder type brazing material 62 has characteristics of being easily molten than the wire type brazing material 61. Then, when the powder type brazing material 62 melts, it induces melting of the wire type brazing material and the wire type brazing material 61 starts melting. That is, when the powder type brazing material 62 is used, the wire type brazing material 61 is likely to easily melt as compared with the case where there is no powder type brazing material 62.

The powdered type brazing material 62 is, for example, provided in an end portion of the brazing material 60. In the example shown in Fig. 8, the powder type brazing material 62 is applied on both ends of the wire type brazing material 61. Thereby, the brazing material 60 is likely to easily melt as a whole.

The combination of the second embodiment and the third embodiment described above is possible.

### (Fourth embodiment)

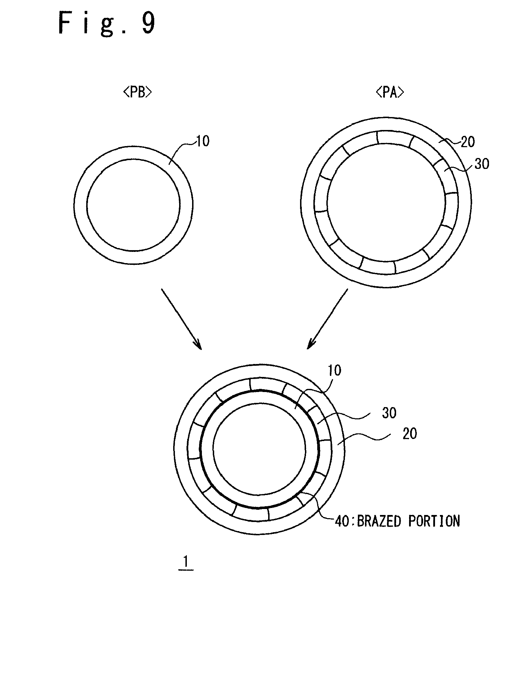

In the embodiments described above, the inner ring portion 10 and the blade 30 are integrally formed. In the fourth embodiment, alternatively, the outer ring portion 20 and the blade 30 are integrally formed. Referring to Fig. 9, the manufacturing method of the turbine nozzle according to the fourth embodiment will be explained.

Firstly, the first part PA and the second part PB are separately formed. In the present embodiment, the first part PA is a part which integrally includes the outer ring portion 20 and the blade 30 (the blades 30). On the other hand, the second part PB is the inner ring portion 10.

Subsequently, the second part PB (the inner ring portion 10) is arranged inside the ring of the first part PA. That is, the first part PA and the second part PB are combined such that the outer side surface 12 of the inner ring potion 10 and the inner side surface 21 of the outer ring portion 20 are arranged to oppose each other. Then, the blade 30 of the first part PA and the second part PB are joined by "brazing". The method of brazing is the same as the aforementioned embodiments. The turbine nozzle 1 manufactured in this way has the brazed portion 40 (the joint portion formed of the brazing material) between the blade 30 and the second part PB.

However, it is easier to form the blade 30 on the outer side surface 12 of the inner ring portion 10 as compared with the case where the blade 30 is formed on the inner side surface 21 of the outer ring portion 20. In this sense, those of the aforementioned embodiments is preferred than those of the fourth embodiment.

In the above, some embodiments of the present invention have been explained with reference to the attached drawings. However, the present invention is not limited to the above-mentioned embodiments, and they may be appropriately modified by those skilled in the art without departing from the spirit or scope of the general invention concept thereof.

This application claims a priority based on Japanese Patent Application No. JP 2013-029430. The disclosure of which is hereby incorporated by reference herein in its entirely.

## Claims

1. A manufacturing method of a turbine nozzle, the turbine nozzle including an inner ring portion, an outer ring portion having a diameter larger than a diameter of the inner ring portion and a blade arranged between the inner ring portion and the outer ring portion, the method comprising:
(A) forming a first part which includes the blade and one of the inner ring portion and the outer ring portion integrated therein;
(B) forming the other of the inner ring portion and the outer ring portion as a second part;
(C) combining the first part and the second part such that an outer side surface of the inner ring portion and an inner side surface of the outer ring portion are arranged to oppose each other and that a gap is formed between the blade of the first part and the second part; and
(D) flowing a brazing material in a molten state into the gap to braze the blade of the first part and the second part.

2. The manufacturing method according to claim 1, further comprising:
inserting a spacer in the gap between (C) the combining the first part and the second part and (D) the flowing a brazing material in a molten state into the gap.

3. The manufacturing method according to claim 1 or 2, wherein the brazing material is arranged at a position adjacent to the gap on an upper surface of the blade.

4. The manufacturing method according to any one of claims 1 to 3, wherein the brazing material includes both a wire type brazing material and a powder type brazing material.

5. The manufacturing method according to any one of claims 1 to 4, wherein the first part includes the inner ring portion and the blade integrated therein,
wherein the second part is the outer ring portion.

6. A turbine nozzle comprising:
an inner ring portion;
an outer ring portion having a diameter larger than a diameter of the inner ring portion; and
a blade arranged between the inner ring portion and the outer ring portion,
wherein the blade and one of the inner ring portion and the outer ring portion are integrally formed as a first part,
wherein the other of the inner ring portion and the outer ring portion constitutes a second part, and
wherein the first part and the second part are joined by brazing.
